# EUROPÄISCHE PATENTSCHRIFT

(11) **EP 2 565 958 B1**
(45) Veröffentlichungstag und Bekanntmachung des Hinweises auf die Patenterteilung: **16.09.2015**
(21) Anmeldenummer: 12004683.4
(22) Anmeldetag: 22.06.2012
(51) Int. Cl.: H01M 2/10, H01M 2/08

(54) **Batterieeinhausung für Elektro- und Hybridfahrzeuge**
Battery housing for electric and hybrid vehicles
Boîtier pour batterie pour véhicules électriques et hybrides

(30) Priorität: 28.08.2011 DE 102011111229
(43) Veröffentlichungstag der Anmeldung: 06.03.2013
(73) Patentinhaber: GEDIA Gebrüder Dingerkus GmbH, 57439 Attendorn (DE)
(72) Erfinder: Heuel, Gerhard, 57462 Olpe (DE); Freitag, Winfried, 57462 Olpe (DE); Rau, Holger, 51580 Reichshof (DE); Weisse, Frank, 57482 Wenden (DE)
(74) Vertreter: Köchling, Conrad-Joachim

(56) Entgegenhaltungen:
- EP-A1- 2 214 225
- DE-A1-102009 018 787
- US-A- 4 592 972
- US-A1- 2007 087 266
- US-A1- 2010 136 402

## Beschreibung

Die Erfindung betrifft eine Batterieeinhausung für wieder aufladbare Akkumulatoren für Elektround Hybridfahrzeuge, zur lagesicheren Aufnahme und transportsicheren Halterung eines wieder aufladbaren Akkumulators oder Akkumulatorpaketes an einem Fahrzeug gemäß Oberbegriff des Anspruches 1.

Im Stand der Technik ist es bekannt, Fahrzeuge allein oder zusätzlich mit elektromotorischen Antrieben zu versehen. Diese elektromotorischen Antriebe müssen mit einer Energiequelle versorgt werden. Diese Energiequelle wird durch eine Vielzahl von Akkumulatoren gebildet, die einzeln oder gebündelt zu Akkumulatorenpaketen im oder am Fahrzeug angeordnet sind.

Bei im Stand der Technik bekannten Lösungen sind die Akkumulatoren oder Akkumulatorenpaketen mit einer hohen Anzahl von Befestigungsmitteln wie Schrauben, Nieten oder Klammern am Fahrzeug befestigt.

Hierbei ist es nachteilig, dass zum Austauschen einzelner Akkumulatoren oder einzelner Akkumulatorenpakete die große Anzahl an Befestigungsmitteln gelöst werden muss, und nach Austausch des Akkumulators oder des Akkumulatorpaketes die Befestigungsmittel wieder angebracht werden müssen. Dies bedeutet insbesondere im Falle des Austausches einzelner Akkumulatoren oder Akkumulatorenpaketen einen erhöhten Zeitaufwand und verursacht somit hohe Kosten.

Aus der US 2007/087266 A1 ist eine Batterieeinhausung gattungsgemäßer Art bekannt. Auch die US 2010/136402 A1 und die DE 10 2009 018787 A1 zeigen solche Batterieeinhausungen.

Aufgrund des eingangs genannten Standes der Technik liegt der Erfindung die Aufgabe zugrunde, eine Batterieeinhausung der eingangs genannten Art zur Verfügung zu stellen, die eine vorzugsweise luftdichte und gegebenenfalls chemikalienbeständige Aufnahme der Akkumulatoren oder Akkumulatorenpakete ermöglicht, die ein besonders schnelles und einfaches Auswechseln einzelner Akkumulatoren oder Akkumulatorenpakete ermöglicht, die gegebenenfalls an vorhandene Platzverhältnisse im Fahrzeug durch flexible Größengestaltung anpassbar ist, die kostengünstig und einfach herstellbar ist und eine hohe Lebensdauer aufweist, wobei insbesondere eine größtmögliche Ausnutzung des Behälterinnenraumes durch eingestellte Akkumulatoren erreicht werden soll.

Zur Lösung dieser Aufgabe schlägt die Erfindung vor, dass der an jede Seitenwand angrenzende Bereich des Bodens des kastenartigen Behälters eine Vertiefung aufweist, die eine umlaufende Rinne bildet.

Ein derartiger kastenartiger Behälter kann in seinen Abmessungen an die gegebenen Räumlichkeiten am oder im Fahrzeug entsprechend angepasst werden, so dass eine größtmögliche Ausnutzung von vorhandenen Räumen für die lagesichere Aufnahme und transportsichere Halterung der wiederaufladbaren Akkumulatoren oder Akkumulatorenpakete an einem Fahrzeug ermöglicht ist. Der kastenartige Behälter mit Deckel kann dabei chemikalienbeständig und luftdicht ausgebildet sein, so dass ein auch gegenüber der Umwelt sicherer Transport und Gebrauch der Akkumulatoren oder Akkumulatorenpakete ermöglicht ist.

Eine derartig umlaufende Rinne erhöht, insbesondere bei einem durch Tiefziehen hergestellten kastenartigen Behälter die Ausnutzung des gebildeten Raumes, da bedingt durch das Tiefziehen die Eckbereiche Rundungen mit relativ großem Radius aufweisen, wodurch ein ungewünschtes Einengen des Aufnahmeraumes des kastenartigen Behälters bedingt ist, wenn dieser in dem Behälter eingestellt werden soll. Die umlaufende Rinne befindet sich unterhalb der Aufstandsebene des in den kastenartigen Behälter eingestellten quaderförmigen Akkumulators beziehungsweise Akkumulatorpaketes, so dass der Akkumulator beziehungsweise das Akkumulatorpaket auf der durch den Boden des kastenartigen Behälters gebildeten Ebene aufsteht und flächig an der an den Boden angrenzenden Seitenwand anliegen kann, weil die Rundung zwischen Boden, Seitenwand und Eckbereich unterhalb des Bodens in der dort befindlichen Rinne ausgebildet ist. Hierdurch ist eine größtmögliche Ausnutzung des vom kastenartigen Behälter umschlossenen Raumes ermöglicht.

Dabei kann besonders bevorzugt vorgesehen sein, dass erste Befestigungsmittel zur Befestigung der Akkumulatoren oder Akkumulatorpakete an der Innenmantelfläche der Batterieeinhausung und zweite Befestigungsmittel zur Befestigung der Batterieeinhausung an Fahrzeugteilen vorgesehen sind.

Auch kann besonders bevorzugt vorgesehen sein, dass an dem kastenartigen Behälter und /oder am Deckel Wanddurchführungen zur Durchführung von Leitungen, insbesondere elektrischen Leitungen und/oder Leitungen zur Be- und Entlüftung angeordnet sind.

Durch die Anordnung entsprechender Befestigungsmittel und Wanddurchführungen zur Durchführung von Leitungen kann die Batterieeinhausung an sich und auch die Akkumulatoren oder Akkumulatorpakete innerhalb der Batterieeinhausung auf schnelle und einfache Art und Weise am Fahrzeug montiert werden, wobei durch die Wanddurchführung oder Wanddurchführungen ein Anschließen elektrischer Leitungen oder Lüftungsleitungen auf schnelle und einfache Art und Weise ermöglicht ist.

Darüber hinaus kann besonders bevorzugt vorgesehen sein, dass der kastenartige Behälter aus einem Blechzuschnitt geformt ist, wobei die in der Montagesolllage aneinander liegenden Kanten abgedichtet sind.

Die Herstellung des kastenartigen Behälters aus einem Blechzuschnitt stellt eine kostengünstige und einfach zu fertigende Lösung dar. Hierbei wird lediglich ein entsprechender Blechzuschnitt beispielsweise gestanzt, entsprechend umgebogen und die aneinander liegenden Kanten abgedichtet miteinander verbunden.

Dabei kann besonders bevorzugt vorgesehen sein, dass die Kanten, die die Eckbereiche bilden, miteinander verlötet sind. Hierdurch ist eine dauerhafte und dabei dichte Verbindung der aneinanderliegenden Kanten ermöglicht.

Alternativ kann besonders bevorzugt vorgesehen sein, dass der kastenartige Behälter aus einer tiefgezogenen Wanne besteht.

Ein eingangs betriebener kastenartiger Behälter kann in einer alternativen Herstellungsart auch mittels Tiefziehen erzeugt werden, wobei auch ein derartiger Behälter kostengünstig und einfach herstellbar ist, und dabei auf einen weiteren Arbeitsgang, nämlich das Abdichten oder Verlöten der Ecken, verzichtet werden kann.

Weiter kann besonders bevorzugt vorgesehen sein, dass der kastenartige Behälter ein Flachteil als Deckel und eine zwischen Flachteil und kastenartigem Behälter angeordnete Dichtung aufweist.

Alternativ kann hierzu besonders bevorzugt vorgesehen sein, dass der kastenartige Behälter einen weiteren, umgedrehten kastenartigen Behälter als Deckel und eine zwischen den beiden kastenartigen Behältern angeordnete Dichtung aufweist.

Die Batterieeinhausung kann somit entweder aus einem ersten kastenartigen Behälter mit einem Flachteil ab Deckel oder, falls gewünscht, aus einem ersten kastenartigen Behälter und einem weiteren, umgedrehten kastenartigen Behälter als Deckel gebildet sein. Dabei ist jeweils zwischen dem ersten kastenartigen Behälter und dem Flachteil oder zwischen dem ersten kastenartigen Behälter und dem weiteren, umgedrehten kastenartigen Behälter eine Dichtung angeordnet, die die Batterieeinhausung in der Zusammenbaulage nach außen fluiddicht abdichtet. Somit ist ein Abgeben von Gasen oder chemischen Flüssigkeiten, beispielsweise bei einem Defekt einer Akkuzelle, weitestgehend verhindert.

Zur schnellen und einfachen und auch wieder lösbaren Verbindung des durch ein Flachteil oder einen weiteren kastenartigen Behälter gebildeten Deckels am ersten kastenartigen Behälter kann besonders bevorzugt vorgesehen sein, dass der kastenartige Behälter einen nach außen abragenden Flanschrand aufweist, auf dem der Deckel in der Zusammenbaulage aufliegt und mit dem der Deckel verbindbar oder verbunden, insbesondere verschraubt oder verclipst, ist.

Durch die aneinander liegenden Flanschränder oder das auf dem Flanschrand des kastenartigen Behälters aufliegende Flachteil ist ein schnelles und einfaches Verbinden und auch wieder Lösen des Deckels durch Entfernen und Wiederanbringen entsprechender Befestigungsmittel am ersten kastenartigen Behälter ermöglicht.

Weiter kann dabei besonders bevorzugt vorgesehen sein, die Dichtung am kastenartigen Behälter und / oder am Deckel zwischen Deckel und Flanschrand oder zwischen zwei Flanschrändern angeordnet ist.

Auch eine derartig angebrachte Dichtung kann beispielsweise nach dem Lösen des Deckels auf schnelle und einfache Art und Weise entfernt und anschließend erneuert werden, bevor der Deckel wieder mit dem kastenartigen Behälter verbunden wird.

Darüber hinaus kann besonders bevorzugt vorgesehen sein, dass die Höhe des ersten und des Weiteren kastenartigen Behälters gleich ist, wobei die im Innenraum gebildete Gesamthöhe mindestens der Höhe eines Akkumulators oder Akkumulatorpaketes entspricht.

Die Höhe des kastenartigen Behälters kann entsprechend der Höhe der einzubringenden Akkumulatoren beziehungsweise Akkumulatorenpakete dimensioniert sein, so dass beispielsweise standardisierte Akkumulatoren oder Akkumulatorenpakete innerhalb der Batterieeinhausung platziert und beispielsweise im Falle eines Defektes auf schnelle und einfache Art und Weise einzeln ausgetauscht werden können.

Zur optimalen Ausnutzung des vorhandenen Raumes und um ein besonders schnelles Wechseln einzelner Akkumulatoren oder Akkumulatorenpakete zu ermöglichen, kann besonders bevorzugt vorgesehen sein, dass mehrere Batterieeinhausungen nebeneinander angeordnet und zu einer flächigen Einheit miteinander verbunden oder verbindbar sind.

Die Verbindung mehrerer nebeneinander angeordneter Batterieeinhausungen zu einer flächigen Einheit ermöglicht eine nahezu optimale Ausnutzung vorhandener Räume am Fahrzeug und gleichzeitig ein besonders schnelles Austauschen beispielsweiser defekter Akkumulatoren oder Akkumulatorpaketen. Hierzu muss lediglich eine geringe Anzahl von Verbindungsmitteln wie beispielsweise Schrauben oder Clipse gelöst werden und nach Austausch des defekten Akkumulators wieder angebracht werden.

Hierdurch kann der Austausch eines defekten Akkumulators oder Akkumulatorpaketes innerhalb von nur kürzester Zeit und somit besonders kostengünstig erfolgen.

Zur schnellen und einfachen Verbindung mehrerer Batterieeinhausungen nebeneinander kann besonders bevorzugt vorgesehen sein, dass die Batterieeinhausungen lösbar miteinander verbunden sind, beispielsweise verschraubt, steckverbunden, verclipst, wobei die Verbindungsmittel an den Seitenwänden und / oder Flanschrändern angeordnet sind.

Bei einer derartig gebildeten flächigen Einheit von Batterieeinhausungen können im Bedarfsfall auch einzelne Batterieeinhausungen komplett aus der flächigen Einheit herausgenommen und ausgetauscht werden.

Alternativ kann besonders bevorzugt vorgesehen sein, dass die Batterieeinhausungen unlösbar miteinander verbunden sind, beispielsweise verschweißt, verklebt oder vernietet wobei die Verbindungsmittel an den Seitenwänden und / oder Flanschrändern angeordnet sind.

Hierbei sind die Batterieeinhausungen dauerhaft zu einer flächigen Einheit miteinander verbunden, wodurch insbesondere die Stabilität der gesamten flächigen Einheit erhöht ist.

Zur besonders einfachen und schnellen und gegebenenfalls auch wieder lösbaren Verbindung mehrerer Batterieeinhausungen zu einer flächigen Einheit kann besonders bevorzugt vorgesehen sein, dass die einander benachbarten Wände der miteinander verbindbaren oder verbundenen Batterieeinhausungen Wanddurchführungen aufweisen, wobei die Wanddurchführungen Steckverbinder zur Durchführung von Leitungen, insbesondere elektrischen Leitungen und/oder Leitungen zur Kühlung und/oder Belüftung aufweisen, mittels derer die Leitungen von einer ersten Batterieeinhausung heraus in eine weitere Batterieeinhausung hinein geführt sind, wobei die Leitung im Bereich der Wanddurchführung gegenüber der äußeren Umgebung hermetisch abgedichtet ist.

Dabei kann besonders bevorzugt vorgesehen sein, dass die Steckverbinder derart angeordnet und ausgebildet sind, dass jede Batterieeinhausung einzeln austauschbar ist.

Auch die mittels Steckverbindern miteinander verbundenen Batterieeinhausungen können je nach Ausführungsform einzeln ausgetauscht werden, so dass beispielsweise bei einem Defekt innerhalb einer Batterieeinhausung oder einer teilweisen Beschädigung der flächigen Einheit einzelne Batterieeinhausungen austausch- und somit erneuerbar sind. Hierzu sind die Steckverbinder vorzugsweise so ausgerichtet und angeordnet, dass sie vertikal zur Bodenfläche der Einhausungen steckbar sind, also eine Steckverbindung durch das vertikale Einsetzen der Einhausungen miteinander in Eingriff bringbar sind. Mittels der durch die Wände hindurchgeführten Steckverbinder können sowohl elektrische Leitungen als auch Leitungen zur Kühlung und / oder Belüftung die einzelnen Batterieeinhausungen miteinander verbinden. Auch können die Leitungen aus der jeweiligen Seiten-Batterieeinhausung herausgeführt und mit entsprechenden Teilen des Fahrzeugs verbunden werden.

Zur Erhöhung der Stabilität eines jeden einzelnen kastenartigen Behälters kann besonders bevorzugt vorgesehen sein, dass der Deckel und / oder der Boden des kastenartigen Behälters eine Versteifungssicke oder mehreren Versteifungssicken aufweist.

Auch kann besonders bevorzugt vorgesehen sein, dass jeder kastenartige Behälter und/oder der Deckel aus Stahl, Aluminium, Magnesium oder Kunststoff besteht.

Schließlich kann besonders bevorzugt vorgesehen sein, dass mehrere kastenartige Behälter unterschiedlicher Größe nebeneinander angeordnet sind und eine flächige Einheit bilden.

Hierdurch kann insbesondere bei Fahrzeugen die nachträglich mit Batterieeinhausungen nachgerüstet werden, eine optimale Raumausnutzung durch die Kombination von größeren und kleineren Batterieeinhausungen nebeneinander erfolgen.

Die Merkmale der oben zitierten Ansprüche 2, 3, 12 und 13 sind an sich aus der US 2007/087266 A1 bekannt.

Die Merkmale der Ansprüche 3, 7, 9, 10, 19 sind an sich aus der US 2010/136402 A1 bekannt.

Aus der EP 2 214 225 A1 ist eine Batterieeinhausung der im Anspruch 1 angegebenen Gattung bekannt, wobei aus dieser Druckschrift auch die Merkmale der Ansprüche 7, 9 10 und 17 an sich bekannt sind. Aus der US 4 592 972 A ist eine Ausgestaltung gemäß Oberbegriff des Anspruches 1 bekannt. Darüber hinaus sind aus dieser Druckschrift die Merkmale der Ansprüche 2, 7, 12, 14, 19 und 20 an sich bekannt.

Aus der DE 10 2009 018 787 A1 sind die Merkmale der Ansprüche 3, 8, 11, 17 und 19 an sich bekannt.

Ein Ausführungsbeispiel der Erfindung ist in den Zeichnungen dargestellt und im Folgenden näher beschrieben.

Es zeigt:
- Figur 1: einen Blechzuschnitt für einen kastenartigen Behälter in der Vormontagelage;
- Figur 2: eine Batterieeinhausung mit Einem Flachteil als Deckel;
- Figur 3: desgleichen mit einem weiteren kastenartigen Behälter als Deckel;
- Figur 4: den Verbindungsbereich zweier kastenartiger Behälter mit Seitenwand und Teil des Bodens in Seitenansicht geschnitten;
- Figur 5: eine mögliche Anordnung Verschieden großer Batterieeinhausungen zu einer flächigen Einheit;
- Figur 6 und Figur 7: einem jeweils eine mögliche Anordnung gleich großer Batterieeinhausungen zu einer flächigen Einheit;

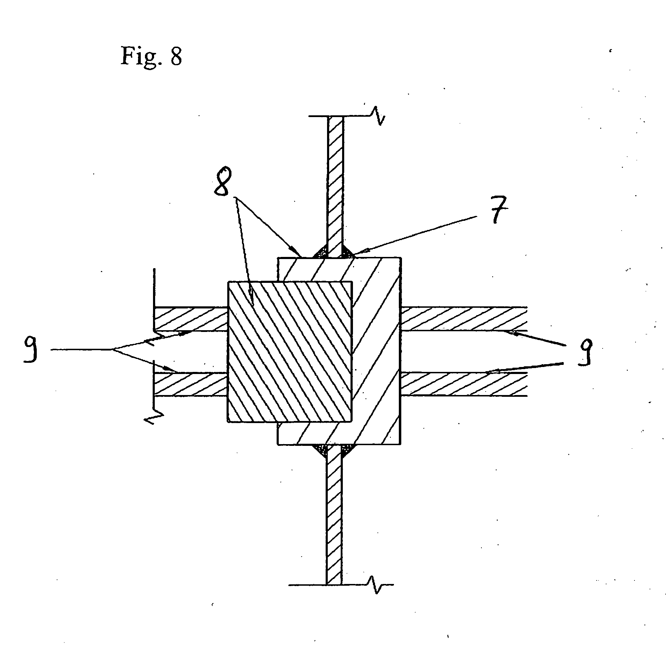

- Figur 8: eine Seitenwand einer Batterieeinhausung mit Steckverbinder und Leitungen.

In den Figuren ist eine Batterieeinhausung 1 für wiederaufladbare Akkumulatoren für Elektro- und Hybridfahrzeuge gezeigt. Die Batterieeinhausung 1 dient zur lagesicheren Aufnahme und transportsicheren Halterung eines wiederaufladbaren Akkumulators oder Akkumulatorpaketes an einem Fahrzeug.

Erfindungsgemäß ist die Batterieeinhausung 1 durch einen kastenartigen Behälter 2 mit einem Deckel gebildet. Dabei befinden sich innerhalb der Batterieeinhausung 1 erste Befestigungsmittel zur Befestigung der Akkumulatoren oder Akkumulatorpaketen an der Innenmantelfläche der Batterieeinhausung und zweite Befestigungsmittel zur Befestigung der Batterieeinhausung 1 an Fahrzeugteilen und / oder benachbarten Batterieeinhausungen 1. In den Ausführungsbeispielen sind an dem kastenartigen Behälter 2 Wanddurchführungen 7 zur Durchführung von Leitungen 9 ausgebildet. Dabei können die Leitungen 9 aus elektrischen Leitungen und / oder Leitungen zur Be- und Entlüftung der Akkumulatoren oder Akkumulatorpaketen bestehen.

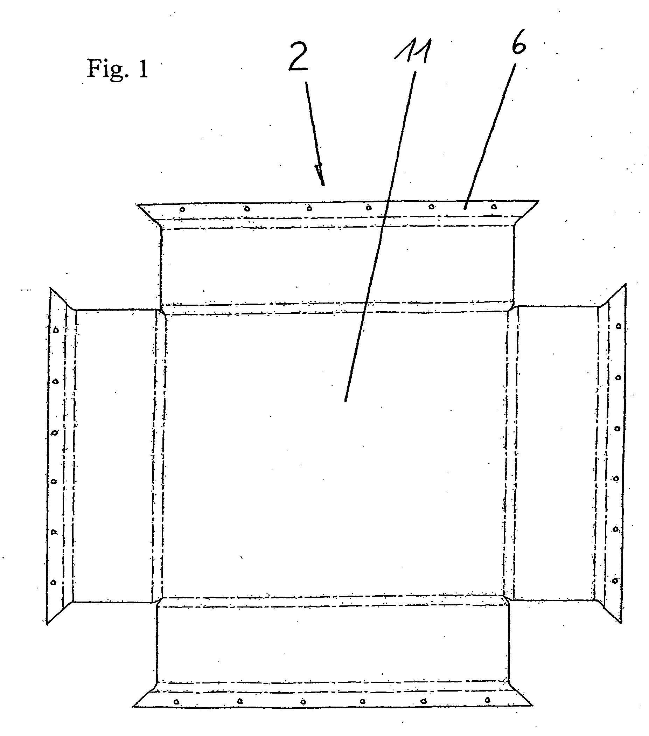

Bei dem in Figur 1 gezeigten Ausführungsbeispiel ist der kastenartige Behälter 2 aus einem Blechzuschnitt geformt, wobei die in der Montagesolllage aneinander liegenden Kanten abgedichtet sind. Die Kanten eines derartigen kastenartigen Behälters 2 sind verlötet, wodurch dieser nach außen abgedichtet ist.

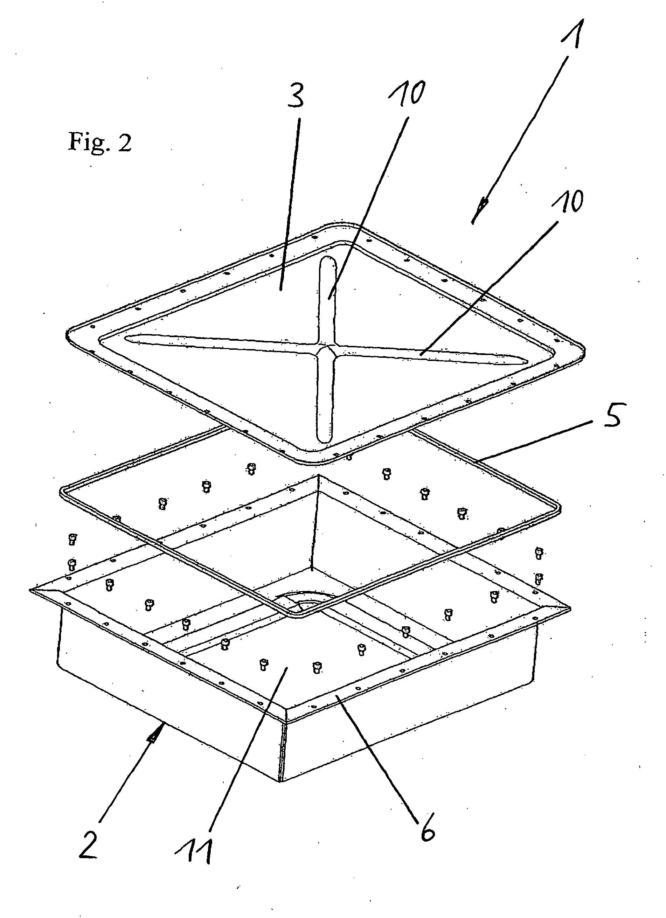

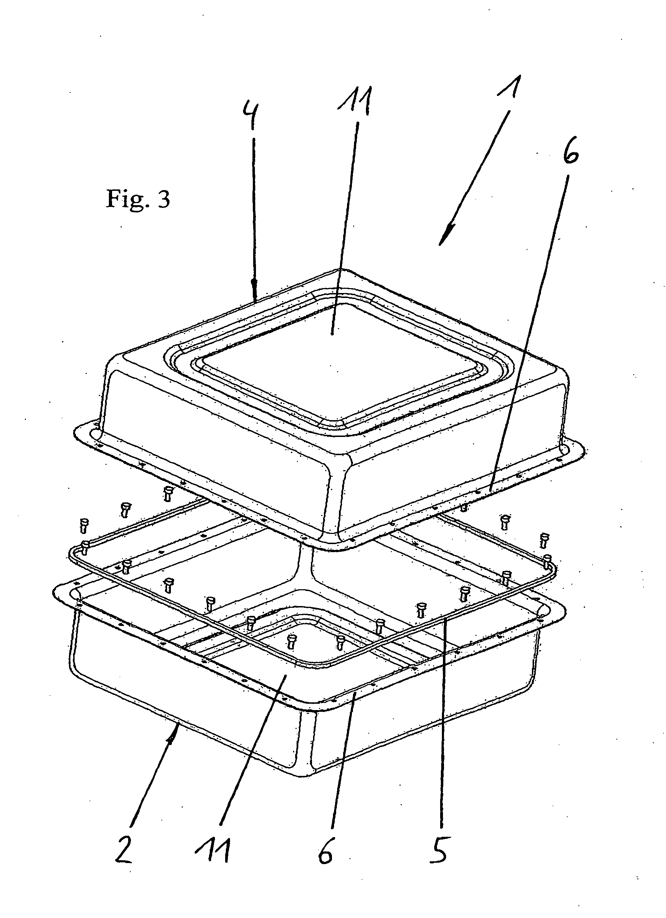

Bei dem in Figur 2 und Figur 3 gezeigten Ausführungsbeispiel besteht der kastenartige Behälter 2 aus einer tiefgezogenen Wanne. Sowohl ein aus einem Blechzuschnitt geformter kastenartiger Behälter 2 (Figur 1) als auch ein mittels Tiefziehen hergestellter kastenartiger Behälter 2 (Figur 2 und Figur 3) kann auf kostengünstige Art und Weise hergestellt werden und eine hohe Lebensdauer der Batterieeinhausung ermöglichen.

Wie insbesondere aus Figur 2 ersichtlich, kann der Deckel des kastenartigen Behälters 2 durch ein Flachteil 3 gebildet sein, wobei zwischen Flachteil 3 und kastenartigen Behälter 2 eine Dichtung 5 angeordnet ist.

In einem alternativen Ausführungsbeispiel, wie insbesondere aus Figur 3 ersichtlich, ist der Deckel durch einen weiteren, umgedrehten kastenartigen Behälter 4 gebildet und eine Dichtung 5 zwischen dem ersten kastenartigen Behälter 2 und dem weiteren, umgedrehten kastenartigen Behälter 4 angeordnet.

Zur schnellen und einfachen Verbindung des durch ein Flachteil 3 oder einen weiteren umgedrehten kastenartigen Behälter 4 gebildeten Deckels mit dem kastenartigen Behälter 2 ist am kastenartigen Behälter 2 und gegebenenfalls am weiteren, umgedrehten kastenartigen Behälter 4 jeweils ein Flanschrand 6 ausgebildet, auf dem der Deckel aufliegt, und mit dem der Deckel, der durch das Flachteil 3 oder den weiteren, umgedrehten kastenartigen Behälter 4 gebildet ist, verschraubt oder verclipst ist.

Die Dichtung 5 ist, wie aus Figur 2 und Figur 3 ersichtlich, zwischen Flanschrand 6 und dem jeweiligen Deckel (Flachteil 3 oder umgedrehter, kastenartiger Behälter 4) angeordnet.

Im Ausführungsbeispiel ist die Höhe des ersten und des weiteren kastenartigen Behälters 2, 4 gleich hoch. Dabei entspricht die im Innenraum der Batterieeinhausung 1 gebildete Gesamthöhe der Höhe eines Akkumulators oder Akkumulatorpaketes.

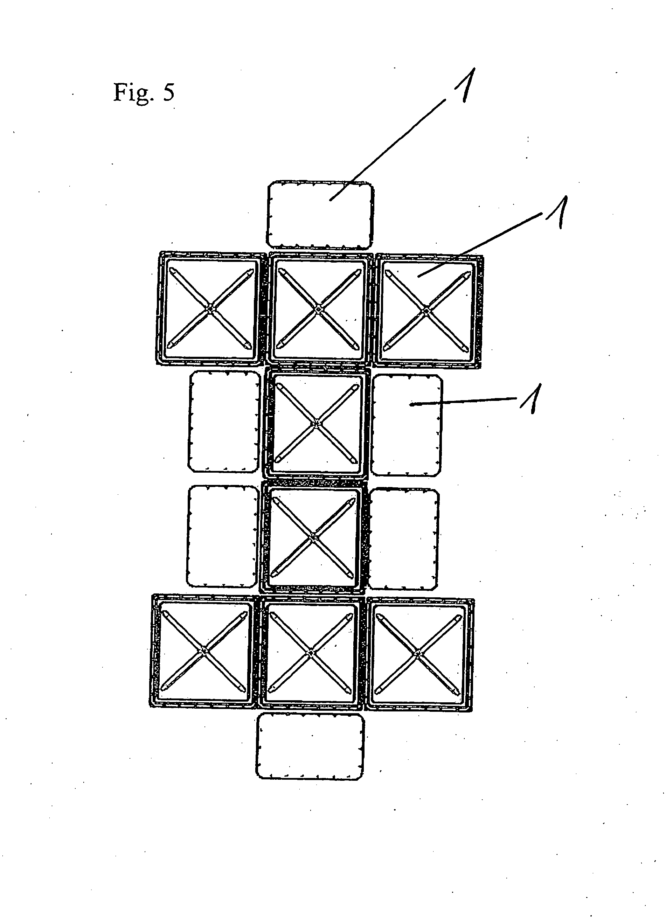

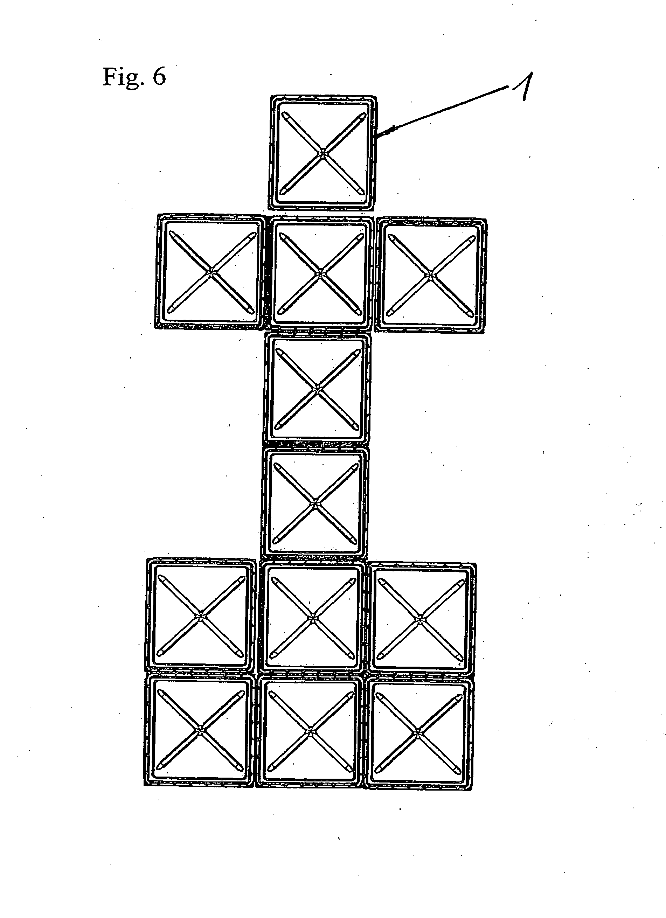

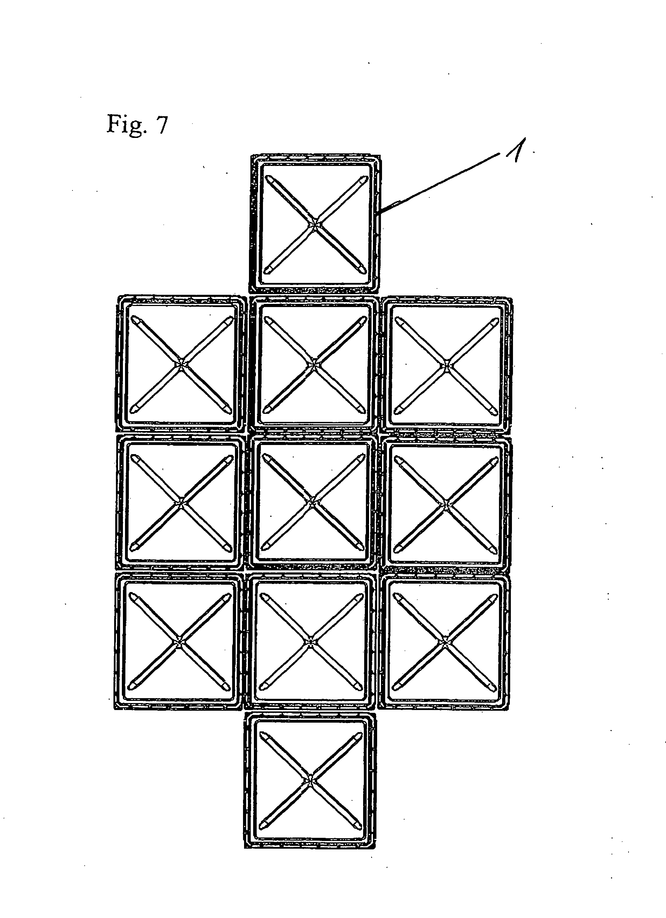

Wie insbesondere aus den Figuren 5 bis 7 ersichtlich, können mehrere Batterieeinhausungen 1 nebeneinander zu einer flächigen Einheit miteinander verbunden werden. Dabei können wie insbesondere aus Figur 5 ersichtlich, die Batterieeinhausungen 1 verschiedene Größe aufweisen. Hierdurch ist eine optimale Raumausnutzung gegebener Räume an einem Fahrzeug ermöglicht, da durch eine Kombination von größeren und kleineren Batterieeinhausungen zu einer flächigen Einheit der gesamte zur Verfügung stehende Raum an einem Fahrzeug ausgenutzt und somit zu einer Einhausung von Akkumulatoren oder Akkumulatorpaketen genutzt werden kann.

Im Ausführungsbeispiel sind alle Batterieeinhausungen 1 lösbar miteinander verbunden, insbesondere verschraubt. Alternativ können die Batterieeinhausungen auch unlösbar miteinander verbunden sein, beispielsweise verschweißt, verklebt oder vernietet. Die Verbindungsmittel sowohl zur lösbaren als auch unlösbaren Verbindung der Batterieeinhausungen 1 zu einer flächigen Einheit können dabei an den Seitenwänden und / oder an den Flanschrändern 6 angeordnet sein. Alternativ können die lösbar miteinander verbundenen Batterieeinhausungen 1 auch verclipst, steckverbunden oder mittels weiterer lösbarer Verbindungsmittel miteinander verbunden sein.

Die Verbindung mehrerer gleich großer oder verschieden großer Batterieeinhausungen 1 zu einer flächigen Einheit ermöglicht zudem ein besonders schnelles und somit kostengünstiges Austauschen einzelner Batterieeinhausungen oder Akkumulatoren oder Akkumulatorpaketen im Bedarfsfall. Im Falle des Austausches defekter Akkumulatoren muss lediglich der Deckel des jeweiligen kastenartigen Behälters gelöst und nach Austausch des Akkumulators beziehungsweise des Akkumulatorpaketes wieder befestigt werden. Hierzu ist lediglich das Lösen einer verhältnismäßig geringen Anzahl von Verbindungsmitteln erforderlich, so dass nur ein geringer Zeitaufwand entsteht. Auch kann leicht die Einhausung mit dem defekten Akkumulator aus dem Verbund mit den anderen Einhausungen gelöst und entnommen werden.

Die einander benachbarten Wände der miteinander verbindbaren Batterieeinhausungen 1 weisen Wanddurchführungen 7 auf, in denen Steckverbinder 8 zur Durchführung von Leitungen 9, beispielsweise elektrischen Leitungen oder Leitungen zur Kühlung und / oder Belüftung angeordnet sind. Mittels der in der jeweiligen Wanddurchführung 7 angeordneten Steckverbinder 8 können die Leitungen 9 beispielsweise aus einer ersten Batterieeinhausung 1 heraus in eine weitere Batterieeinhausung 1 hineingeführt werden. Dabei sind sämtliche Leitungen 9 im Bereich der Wanddurchführung 7 gegenüber der äußeren Umgebung hermetisch abgedichtet, so dass ein unerwünschtes Abgeben von Fluiden aus der jeweiligen Batterieeinhausung 1 heraus an die Umwelt verhindert ist.

Die Steckverbinder 8 sind dabei derart an der Batterieeinhausung 1 angeordnet, dass jede Batterieeinhausung 1 einzeln austauschbar ist. Zur Erhöhung der Stabilität und um eine Verwendung besonders dünner und somit gewichtsarmer Materialien zu ermöglichen, sind im Boden 11 jedes kastenartigen Behälters 2, 4 und gegebenenfalls im Flachteil 3 mindestens eine Versteifungssicke 10, im Ausführungsbeispiel mehrere Versteifungssicken 10, ausgebildet.

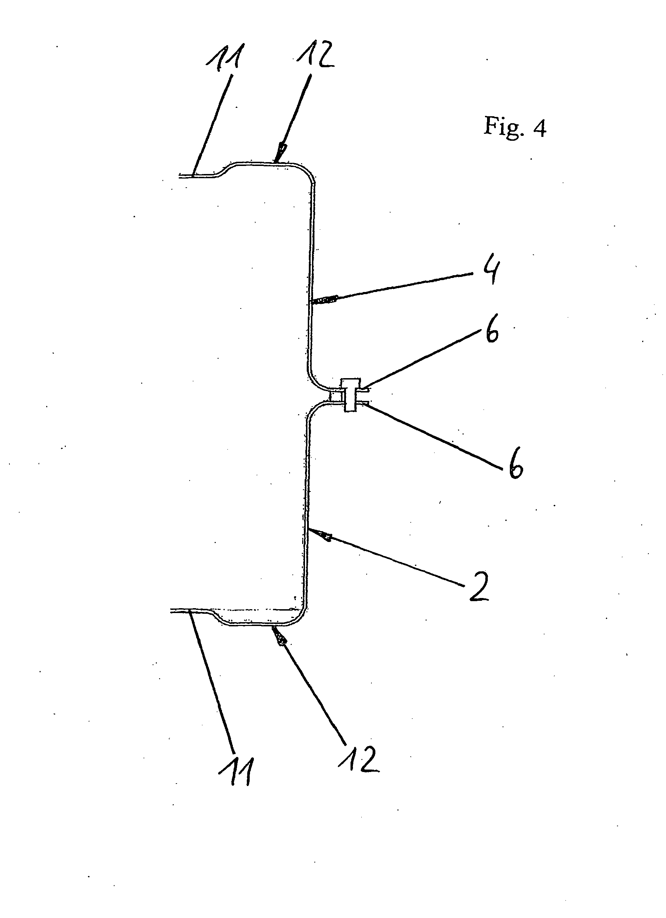

Zur größtmöglichen Ausnutzung des vorhandenen Raumes bei einem mittels Tiefziehen hergestellten kastenartigen Behälter 2 ist im an jede Seitenwand angrenzenden Bereich des Bodens 11 des kastenartigen Behälters 2,4 eine Vertiefung in Form einer umlaufenden Rinne 12 ausgebildet. Hierdurch ist der Radius zwischen Seitenwand und Boden unterhalb der Aufstandsebene für die Akkumulatoren angeordnet, wie insbesondere in Figur 4 ersichtlich.

Die in den Figuren gezeigten Batterieeinhausungen 1 bestehen aus Stahl. Alternativ und in den Figuren nicht gezeigt, können die kastenartigen Behälter 2,4 und / oder das Flachteil 3 aus Aluminium, Magnesium oder Kunststoff bestehen.

Je nach am Fahrzeug vorhandenen Raum können mehrere kastenartige Behälter 2,4 unterschiedliche Größe nebeneinander angeordnet sein (vergleiche Figur 5 bis 7) und eine flächige Einheit bilden. Hierdurch ist eine größtmögliche Ausnutzung des vorhandenen Raums am Fahrzeug ermöglicht.

## Patentansprüche

1. Batterieeinhausung (1) für wieder aufladbare Akkumulatoren für Elektro- und Hybridfahrzeuge, zur lagesicheren Aufnahme und transportsicheren Halterung eines wieder aufladbaren Akkumulators oder Akkumulatorpaketes an einem Fahrzeug, wobei die Batterieeinhausung (1) durch einen kastenartigen Behälter (2) mit einem Deckel gebildet ist, **dadurch gekennzeichnet, dass** der an jede Seitenwand angrenzende Bereich des Bodens (11) des kastenartigen Behälters (2) eine Vertiefung aufweist, die eine umlaufende Rinne (12) bildet.

2. Batterieeinhausung (1) nach Anspruch 1, **dadurch gekennzeichnet, dass** erste Befestigungsmittel zur Befestigung der Akkumulatoren oder Akkumulatorpaketen an der Innenmantelfläche der Batterieeinhausung (1) und zweite Befestigungsmittel zur Befestigung der Batterieeinhausung (1) an Fahrzeugteilen und / oder einer benachbarten Batterieeinhausung (1) vorgesehen sind.

3. Batterieeinhausung (1) nach Anspruch 1 oder 2, **dadurch gekennzeichnet, dass** an dem kastenartigen Behälter (2) und /oder am Deckel Wanddurchführungen (7) zur Durchführung von elektrischen Leitungen (9) und/oder Leitungen zur Be- und Entlüftung angeordnet sind.

4. Batterieeinhausung (1) nach einem der Ansprüche 1 bis 3, **dadurch gekennzeichnet, dass** der kastenartige Behälter (2) aus einem Blechzuschnitt geformt ist, wobei die in der Montagesolllage aneinander liegenden Kanten abgedichtet sind.

5. Batterieeinhausung (1) nach Anspruch 4, **dadurch gekennzeichnet, dass** die Kanten verlötet sind.

6. Batterieeinhausung (1) nach einem der Ansprüche 1 bis 3, **dadurch gekennzeichnet, dass** der kastenartige Behälter (2) aus einer tiefgezogenen Wanne besteht.

7. Batterieeinhausung (1) nach einem der Ansprüche 1 bis 6, **dadurch gekennzeichnet, dass** der kastenartige Behälter (2) ein Flachteil (3) als Deckel (2) und eine zwischen Flachteil (3) und kastenartigem Behälter (2) angeordnete Dichtung (5) aufweist.

8. Batterieeinhausung (1) nach einem der Ansprüche 1 bis 6, **dadurch gekennzeichnet, dass** der kastenartige Behälter (2) einen weiteren, umgedrehten kastenartigen Behälter (4) als Deckel und eine zwischen den beiden kastenartigen Behältern (2,4) angeordnete Dichtung (5) aufweist.

9. Batterieeinhausung (1) nach Anspruch 7 oder 8, **dadurch gekennzeichnet, dass** der kastenartige Behälter (2) einen nach außen abragenden Flanschrand (6) aufweist, auf dem der Deckel in der Zusammenbaulage aufliegt und mit dem der Deckel verbindbar oder verbunden ist.

10. Batterieeinhausung (1) nach Anspruch 8 oder 9, **dadurch gekennzeichnet, dass** die Dichtung (5) am kastenartigen Behälter (2) und / oder am Deckel zwischen Deckel und Flanschrand (6) oder zwischen zwei Flanschrändern (6) angeordnet ist.

11. Batterieeinhausung (1) nach einem der Ansprüche 8 bis 10, **dadurch gekennzeichnet, dass** die Höhe des ersten und des weiteren kastenartigen Behälters (2,4) gleich ist, wobei die im Innenraum gebildete Gesamthöhe mindestens der Höhe eines Akkumulators oder Akkumulatorpaketes entspricht.

12. Batterieeinhausung (1) nach einem der Ansprüche 1 bis 11, **dadurch gekennzeichnet, dass** mehrere Batterieeinhausungen (1) nebeneinander angeordnet und zu einer flächigen Einheit miteinander verbunden oder verbindbar sind.

13. Batterieeinhausung (1) nach Anspruch 12, **dadurch gekennzeichnet, dass** die Batterieeinhausungen (1) lösbar miteinander verbunden sind, wobei die Verbindungsmittel an den Seitenwänden und / oder Flanschrändern (6) angeordnet sind.

14. Batterieeinhausung (1) nach Anspruch 12, **dadurch gekennzeichnet, dass** die Batterieeinhausungen (1) unlösbar miteinander verbunden sind, wobei die Verbindungsmittel an den Seitenwänden und / oder Flanschrändern (6) angeordnet sind.

15. Batterieeinhausung (1) nach dem Oberbegriff des Anspruches 1, insbesondere nach einem der Ansprüche 12 bis 14, **dadurch gekennzeichnet, dass** die einander benachbarten Wände der miteinander verbindbaren oder verbundenen Batterieeinhausungen (1) Wanddurchführungen (7) aufweisen, wobei die Wanddurchführungen (7) Steckverbinder (8) zur Durchführung von elektrischen Leitungen (9), und/oder Leitungen (9) zur Kühlung und/oder Belüftung aufweisen, mittels derer die Leitungen (9) von einer ersten Batterieeinhausung (1) heraus in eine weitere Batterieeinhausung (1) hinein geführt sind, wobei die Leitung (9) im Bereich der Wanddurchführung (7) gegenüber der äußeren Umgebung hermetisch abgedichtet ist.

16. Batterieeinhausung (1) nach Anspruch 15, **dadurch gekennzeichnet, dass** die Steckverbinder (8) derart angeordnet und ausgebildet sind, dass jede Batterieeinhausung (1) einzeln austauschbar ist.

17. Batterieeinhausung (1) nach einem der Ansprüche 1 bis 16, **dadurch gekennzeichnet, dass** der Deckel und / oder der Boden (11) des kastenartigen Behälters (2,4) eine Versteifungssicke (10) oder mehrere Versteifungssicken (10) aufweist.

18. Batterieeinhausung (1) nach einem der Ansprüche 1 bis 17, **dadurch gekennzeichnet, dass** jeder kastenartige Behälter (2,4) und/oder der Deckel aus Stahl, Aluminium, Magnesium oder Kunststoff besteht.

19. Batterieeinhausung (1) nach einem der Ansprüche 12 bis 18, **dadurch gekennzeichnet, dass** mehrere kastenartige Behälter (2,4) unterschiedlicher Größe nebeneinander angeordnet sind und eine flächige Einheit bilden.

## Claims

1. A battery case (1) for rechargeable accumulators for electric and hybrid vehicles, for a reception securing positioning and support in a manner safe for transportation of a rechargeable accumulator or accumulator pack of a vehicle, the battery case (1) being formed by a box-like container (2) having a lid, **characterized in that** the zone adjacent to each side wall of the bottom (11) of the box-like container (2) has a recess forming a circumferential channel (12).

2. The battery case (1) according to claim 1, **characterized in that** first fixing means for fixing the accumulators or accumulator packs to the inner skirt surface of the battery case (1) and second fixing means for fixing the battery case (1) to vehicle parts and/or an adjacent battery case (1) are provided.

3. The battery case (1) according to claim 1 or 2, **characterized in that** at the box-like container (2) and/or at the lid are arranged wall passages (7) for passing electrical cables (9) and/or cables for aeration and ventilation.

4. The battery case (1) according to one of claims 1 to 3, **characterized in that** the box-like container (2) is formed of cut metal sheet, the adjacent edges thereof, in the intended mounting position, being sealed.

5. The battery case (1) according to claim 4, **characterized in that** the edges are brazed together.

6. The battery case (1) according to one of claims 1 to 3, **characterized in that** the box-like container (2) consists of a deep-drawn trough.

7. The battery case (1) according to one of claims 1 to 6, **characterized in that** the box-like container (2) has a flat portion (3) as the lid (2) and a seal (5) disposed between the flat portion (3) and the box-like container (2).

8. The battery case (1) according to one of claims 1 to 6, **characterized in that** the box-like container (2) has another reversed box-like container (4) as the lid and a seal (5) disposed between the two box-like containers (2, 4).

9. The battery case (1) according to claim 7 or 8, **characterized in that** the box-like container (2) has an outwardly projecting flanged edge (6), on which the lid is supported, in the assembled position, and to which the lid can be connected or is connected.

10. The battery case (1) according to claim 8 or 9, **characterized in that** the seal (5) at the box-like container (2) and/or at the lid is disposed between the lid and the flanged edge (6) or between two flanged edges (6).

11. The battery case (1) according to one of claims 8 to 10, **characterized in that** the heights of the first and of the other box-like container (2, 4) are identical, the total height formed in the inner space corresponding to at least the height of an accumulator or an accumulator pack.

12. The battery case (1) according to one of claims 1 to 11, **characterized in that** a plurality of battery cases (1) are arranged side by side and are connected or can be connected so to form a planar unit.

13. The battery case (1) according to claim 12, **characterized in that** the battery cases (1) are detachably connected to each other, the connection means being disposed at the side walls and/or the flanged edges (6).

14. The battery case (1) according to claim 12, **characterized in that** the battery cases (1) are undetachably connected to each other, the connection means being disposed at the side walls and/or the flanged edges (6).

15. The battery case (1) according to the preamble of claim 1, in particular to one of claims 12 to 14, **characterized in that** the adjacent walls of the battery cases (1) that can be connected or are connected to each other comprise wall passages (7), the wall passages (7) having plug connectors (8) for passing electrical cables (9) and/or cables (9) for cooling and/or venting, by means of which the cables (9) are guided out of a first battery case (1) into another battery case (1), the cable (9) being hermetically sealed in the zone of the wall passage (7) from the outer environment.

16. The battery case (1) according to claim 15, **characterized in that** the plug connectors (8) are arranged and configured such that each battery case (1) can individually be replaced.

17. The battery case (1) according to one of claims 1 to 16, **characterized in that** the lid and/or the bottom (11) of the box-like container (2, 4) has a reinforcement bead (10) or a plurality of reinforcement beads (10).

18. The battery case (1) according to one of claims 1 to 17, **characterized in that** each box-like container (2, 4) and/or the lid is made of steel, aluminum, magnesium, or plastic.

19. The battery case (1) according to one of claims 12 to 18, **characterized in that** a plurality of box-like containers (2, 4) of different sizes are arranged side by side and form a planar unit.

## Revendications

1. Boîtier de batteries (1) pour des accumulateurs rechargeables pour des véhicules électriques et hybrides, pour le logement sécurisant la position et le maintient de façon sûre pour le transport d'un accumulateur rechargeable ou d'un bloc-accumulateur d'un véhicule, le boîtier de batteries (1) étant réalisé par un conteneur (2) en forme de boîte ayant un couvercle, **caractérisé en ce que** la zone voisine de chaque paroi latérale du fond (11) du conteneur (2) en forme de boîte a une dépression formant un canal circonférentiel (12).

2. Boîtier de batteries (1) selon la revendication 1, **caractérisé en ce que** des premiers moyens de fixation pour la fixation des accumulateurs ou blocs-accumulateurs à la surface d'enveloppe intérieure du boîtier de batteries (1) et des deuxièmes moyens de fixation pour la fixation du boîtier de batteries (1) à des parties du véhicule et/ou une boîtier de batteries (1) voisin sont prévus.

3. Boîtier de batteries (1) selon la revendication 1 ou 2, **caractérisé en ce qu**'au conteneur (2) en forme de boîte et/ou au couvercle sont disposées des traverses (7) de paroi pour le passage de câbles électriques (9) et/ou de câbles pour l'aération et la ventilation.

4. Boîtier de batteries (1) selon une des revendications 1 à 3, **caractérisé en ce que** le conteneur (2) en forme de boîte est réalisé en une tôle métallique coupée, les arêtes voisines, dans la position de montage de consigne, étant rendues étanches.

5. Boîtier de batteries (1) selon la revendication 4, **caractérisé en ce que** les arêtes sont reliées les unes aux autres par brasage.

6. Boîtier de batteries (1) selon une des revendications 1 à 3, **caractérisé en ce que** le conteneur (2) en forme de boîte consiste en une cuve emboutie.

7. Boîtier de batteries (1) selon une des revendications 1 à 6, **caractérisé en ce que** le conteneur (2) en forme de boîte comporte une partie plate (3) comme couvercle (2) et un joint d'étanchéité (5) disposé entre la partie plate (3) et le conteneur (2) en forme de boîte.

8. Boîtier de batteries (1) selon une des revendications 1 à 6, **caractérisé en ce que** le conteneur (2) en forme de boîte comporte un autre conteneur (4) en forme de boîte inversée comme couvercle et un joint d'étanchéité (5) disposé entre les deux conteneurs (2, 4) en forme de boîte.

9. Boîtier de batteries (1) selon la revendication 7 ou 8, **caractérisé en ce que** le conteneur (2) en forme de boîte comporte une arête (6) en saillie vers l'extérieur, sur laquelle le couvercle est en appui, dans la position assemblée, et à laquelle le couvercle peut être relié ou est relié.

10. Boîtier de batteries (1) selon la revendication 8 ou 9, **caractérisé en ce que** le joint d'étanchéité (5) au conteneur (2) en forme de boîte et/ou au couvercle est disposé entre le couvercle et l'arête de bride (6) ou entre deux arêtes de bride (6).

11. Boîtier de batteries (1) selon une des revendications 8 à 10, **caractérisé en ce que** la hauteur du premier et de l'autre (2, 4) en forme de boîte conteneur est identique, la hauteur totale réalisée dans l'espace intérieur correspondant au moins à la hauteur d'un accumulateur ou d'un bloc-accumulateur.

12. Boîtier de batteries (1) selon une des revendications 1 à 11, **caractérisé en ce que** plusieurs boîtiers de batteries (1) sont disposés l'un à côté de l'autre et sont reliés ou peuvent être reliés pour former une unité plate.

13. Boîtier de batteries (1) selon la revendication 12, **caractérisé en ce que** les boîtiers de batteries (1) sont reliés l'un à l'autre de façon amovible, les moyens de liage étant disposés aux parois latérales et/ou aux arêtes de bride (6).

14. Boîtier de batteries (1) selon la revendication 12, **caractérisé en ce que** les boîtiers de batteries (1) sont reliés l'un à l'autre de façon inamovible, les moyens de liage étant disposés aux parois latérales et/ou aux arêtes de bride (6).

15. Boîtier de batteries (1) selon le préambule de la revendication 1, en particulier selone une des revendications 12 à 14, **caractérisé en ce que** les parois voisines des boîtiers de batteries (1), qui peuvent être reliés ou sont reliés l'un à l'autre, comprennent des traverses (7) de la paroi, les traverses (7) de la paroi ayant des connecteurs (8) pour le passage de câbles électriques (9) et/ou câbles (9) pour le refroidissement et/ou la ventilation, au moyens desquels les câbles (9) sont guidés hors d'un premier boîtier de batteries (1) dans un autre boîtier de batteries (1), le câble (9) étant hermétiquement disposé de façon étanche dans la zone de la traverse (7) de paroi par rapport à l'environnement extérieur.

16. Boîtier de batteries (1) selon la revendication 15, **caractérisé en ce que** les connecteurs (8) sont disposés et configurés de façon que chaque boîtier de batteries (1) puisse être remplacé individuellement.

17. boîtier de batteries (1) selon une des revendications 1 à 16, **caractérisé en ce que** le couvercle et/ou le fond (11) du conteneur (2, 4) en forme de boîte comporte une moulure de renfort (10) ou plusieurs moulures de renfort (10).

18. Boîtier de batteries (1) selon une des revendications 1 à 17, **caractérisé en ce que** chaque conteneur (2, 4) en forme de boîte et/ou le couvercle est réalisé en acier, aluminium, magnésium, ou plastique.

19. Boîtier de batteries (1) selon une des revendications 12 à 18, **caractérisé en ce que** plusieurs conteneurs (2, 4) en forme de boîte à des tailles différentes sont disposés l'un à côté de l'autre et forment une unité plane.
